(19) Europäisches Patentamt
European Patent Office
Office européen des brevets

(11) **EP 4 729 292 A1**

(12) **EUROPEAN PATENT APPLICATION**

(43) Date of publication:
**22.04.2026 Bulletin 2026/17**

(21) Application number: **24206573.8**

(22) Date of filing: **15.10.2024**

(51) International Patent Classification (IPC):
**B32B 17/10** (2006.01)    **B32B 27/08** (2006.01)
**B32B 7/02** (2019.01)    **B29C 48/21** (2019.01)
**C08J 3/22** (2006.01)

(52) Cooperative Patent Classification (CPC):
**B32B 27/08; B29C 48/022; B29C 48/08;
B29C 48/17; B29C 48/21; B32B 7/022;
B32B 7/023; B32B 7/12; B32B 17/10036;
B32B 17/1055; B32B 17/10605; B32B 17/10651;
B32B 17/10761; B32B 17/10935; B32B 27/18;**
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Kuraray Europe GmbH
65795 Hattersheim (DE)**

(72) Inventors:
• **Frangenberg, Matthias
Troisdorf (DE)**
• **Schröter, Jan Denis
Troisdorf (DE)**

(74) Representative: **Janßen, Christian Oliver
Kuraray Europe GmbH
Phillip-Reis-Straße 4
65795 Hattersheim (DE)**

(54) **MULTILAYER FILM WITH UNIFORM COLOR DISTRIBUTION**

(57)    The present invention is directed to a method for manufacturing a pigmented interlayer film by simultaneous extrusion of at least three sublayers, each comprising the same or a different polyvinyl acetal, at least one plasticiser and pigments characterised in

a. providing a masterbatch, comprising at least one plasticiser and the pigments

b. providing at least three mixtures from the masterbatch and the polyvinyl acetals

c. extrusion of the mixtures into at least three sublayers which are combined into the interlayer film

wherein at least one sublayer has a different plasticiser and pigment content than the other sublayers.

dyes and/or pigments in all sublayers;
from bottom to top: L*, a*, b*

Fig. 2

(52) Cooperative Patent Classification (CPC): (Cont.)
**B32B 27/20; B32B 27/22; B32B 27/30; C08J 3/22;**
B29K 2031/04; B29K 2105/0032; B32B 2250/03;
B32B 2250/246; B32B 2250/40; B32B 2264/02;
B32B 2264/102; B32B 2264/108; B32B 2307/102;
B32B 2307/4026; B32B 2307/412;
B32B 2307/7376; C08J 2329/14

**Description**

Multilayer films for so called acoustic glazing comprise usually three sublayers of plasticized polyvinyl butyral. To reduce sound propagation through the interlayer, one of the sublayers is softer that the others, i.e. has a higher plasticizer content.

Such multilayer films are also available in colored variants, wherein the sublayers are provided with pigments or dyes.

In order to provide a homogenous distribution of the pigments or dyes in the sublayer, it is a common manufacturing process to solve or suspend the pigments or dyes in the plasticizer before mixing the plasticizer with the polyvinyl butyral.

It is further a common manufacturing process to manufacture the sublayers by extrusion and combining the sublayers into the interlayer film in one die. Due to the slightly different viscosity of the sublayers during co-extrusion, the sublayers show a slight different laminar flow in the die, resulting in a variation of thickness as seen over the width of the interlayer.

Because of the higher plasticizer content of one sublayer in acoustic glazing, this sublayer has also a higher content of pigments or dyes and appears darker than the other sublayers. Accordingly, variation of thickness leads to variations in color.

Especially for glazing in architectural applications with great surface areas, color variations are easily visible by the naked eye and need to be avoided.

OBJECT OF THE INVENTION

Surprisingly it was found that such thickness related color variations in colored interlayers for acoustic glazings can be avoided if the sublayers in the multilayer film are produced from the same mixture of plasticizer and pigments or dyes.

Accordingly, objection of the inventions is a method for manufacturing a pigmented interlayer film by simultaneous extrusion of at least two sublayers, each comprising the same or a different polyvinyl acetal, at least one plasticiser and at least one pigment and/or dye **characterised in**

a. providing a masterbatch, comprising at least one plasticiser and at least one pigment and/or dye
b. providing at least twomixtures from the masterbatch and the polyvinyl acetals
c. extrusion of the mixtures into at least three sublayers which are combined into the interlayer film

wherein at least one sublayer has a different plasticiser and pigment content than the other sublayers.

With the method according to the invention, interlayers can be produced having a CIE76 color difference $\Delta E^*_{95\%} = \sqrt{(L^*_{\min} - L^*_{\max})^2 + (a^*_{\min} - a^*_{\max})^2 + (b^*_{\min} - b^*_{\max})^2}$ of the interlayer when laminated between two sheets of float glass having a thickness of 2 mm as measured between two points on the laminate having a distance of 10 cm is less than 1.9

BRIEF DESCRIPTION OF THE DRAWINGS

Fig. 1 shows the CIE76 color difference (L*, a*, b* system), as measured from the left to the right edge of a 3 layered interlayer film wherein only the middle sublayer is provided with pigments (not according to the invention)
Fig. 2 shows the CIE76 color difference (L*, a*, b* system), as measured from the left to the right edge of a 3 layered interlayer film wherein all sublayers are provided with pigments (according to the invention)

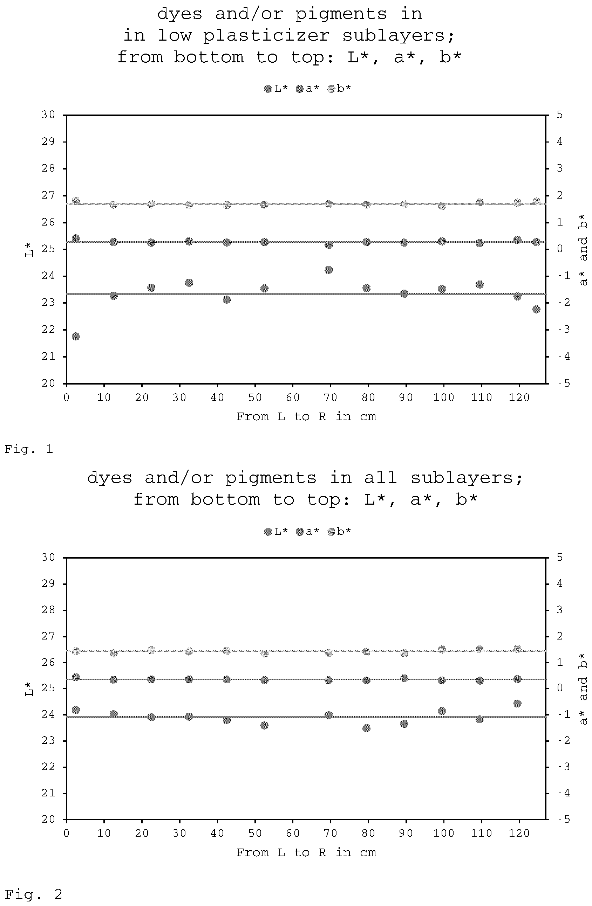

In Fig. 1 and 2, the upper line of data points corresponds to b* values, the middle line with the a* values and the lower line with the L* values.

DETAILED DESCRIPTION

Hereinafter, the term "prior to lamination" refers to the composition of the sublayers prior to having any contact to each other. For example, the term refers to the composition of each sublayer as if separately formed and separately wound to individual rolls. The term "prior to lamination" refers to the composition of the sublayers before combining them during extrusion.

### Pigments / dyes

The masterbatch and - in the end - the interlayer may comprise at least one pigment and/or dye, like 1-5 different pigments and/or dyes. It can be necessary use (i.e. blend) different pigments and/or dyes in order to achieve a desired color in the final interlayer.

As pigments, preferable carbon black, metal oxides, polyaniline, perylenes or spinel pigments are used. The pigments are dispersed or suspended in the plasticizer of the masterbatch.

As dyes, printing inks can be used, for example anthraquinone, azo, perylene, methine, perinone, quinophthalone, coumarin and amino ketone derivatives or copper and nickel complexes.

Preferable, the content of the pigments in the masterbatch is 1-5 % by weight.

### Sublayers

The sublayers may be produced from any mixture of polyvinyl acetal and plasticizer as disclosed later and contains, in the starting state prior to extrusion, at least one sublayer has a different plasticiser contents.

In general, the sublayers contain, in the starting state prior to lamination, at least 22 % by weight, such as 22.0 - 45.0 % by weight, preferably 25.0 - 32.0 % by weight and in particular 26.0 - 30.0 % by weight plasticiser.

At least one sublayer has a different plasticiser and pigment content than the other sublayers, wherein the difference in plasticiser content is preferable at least 20, preferable at least 5% by weight. In praxis, the difference is 10% by weight at most.

More preferred, the interlayer film has three sublayers, and wherein the outer sublayers have a plasticizer content of less than 30 % by weight and the middle sublayer has a plasticizer content of more than 30 % by weight.

In a first embodiment of the invention, the interlayer film has three sublayers, and wherein the sublayer in the middle has a higher plasticizer content as the outer sublayers.

In a second embodiment of the invention, the interlayer film has three sublayers, and wherein the sublayer in the middle has a higher plasticizer content as the outer sublayers and wherein the plasticizer content of the outer sublayers is identical.

In a variant of the embodiments, the interlayer film has three sublayers, and wherein the sublayer in the middle is thinner than the outer sublayers.

In another variant of the embodiments, the interlayer film has three sublayers, and wherein the sublayer in the middle is thinner than the outer sublayers and wherein the thickness of the outer layers is identical.

The thickness of the sublayer with higher plasticizer content is in the range of 25-200 $\mu$m preferably 70-140 $\mu$m. The thickness of the sublayer with lower plasticizer content is in the range of 150 - 500 um, preferably 250 - 380 $\mu$m.

### Polyvinyl Acetal

The sublayers contain polyvinyl acetals, which are produced by acetalisation of polyvinyl alcohol or ethylene vinyl alcohol copolymer.

The sublayers can contain same or different polyvinyl acetals, each having the same or a different polyvinyl alcohol content, degree of acetalisation, residual acetate content, ethylene proportion, molecular weight and/or different chain lengths of the aldehyde of the acetal groups.

In particular, the aldehydes or keto compounds used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n) acetals".

The polyvinylacetal used in accordance with the invention results in particular from the reaction of at least one polyvinyl alcohol with one or more aliphatic unbranched keto-compounds containing 2 to 10 carbon atoms. To this end, n-butyraldehyde is preferably used.

The polyvinyl alcohols or ethylene vinyl alcohol copolymers used to produce the polyvinyl acetals in the sublayers may be identical or different, pure or a mixture of polyvinyl alcohols or ethylene vinyl alcohol copolymers with different degree of polymerisation or degree of hydrolysis.

The polyvinyl acetate content of the polyvinyl acetals in the sublayers can be set by use of a polyvinyl alcohol or ethylene vinyl alcohol copolymer saponified to an appropriate degree. The polarity of the polyvinyl acetal is influenced by the polyvinyl acetate content, whereby the plasticiser compatibility and the mechanical strength of the respective layer also change. It is also possible to carry out the acetalisation of the polyvinyl alcohols or ethylene vinyl alcohol copolymers with a mixture of a number of aldehydes or keto compounds.

The sublayers preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

It is preferred that the sublayer having a greater amount of plasticizer is provided with a different polyvinyl acetal that the other sublayers. Preferable, this sublayer has a polyvinyl alcohol content of the polyvinyl acetal between 14 - 26 % by weight, whereas the sublayers with a lower content of plasticizer have a polyvinyl alcohol content of the polyvinyl acetal between 14 - 26 % by weight.

The sublayers preferably contain uncross-linked polyvinyl acetal. The use of cross-linked polyvinyl acetals is also possible. Methods for cross-linking polyvinyl acetals are described, for example, in EP 1527107 B1 and WO 2004/063231 A1 (thermal self-cross-linking of polyvinyl acetals containing carboxyl groups), EP 1606325 A1 (polyvinyl acetals cross-linked with polyaldehydes) and WO 03/020776 A1 (polyvinyl acetal cross-linked with glyoxylic acid).

Plasticizer

The masterbatch used in accordance with the invention may contain, as plasticiser, one or more compounds selected from the following groups:

- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

Preferable, triethylene glycol-bis-2-ethyl hexanoate (3GO or 3G8) is used as plasticiser.

In addition, the masterbatch may contain further additives, such as alkaline or alkaline earth metal salts residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

Processing

In general, multilayer extrusion processes are well known in the technical field to interlayer films.

In the method of the invention, it is preferred the mixtures are simultaneously extruded in a single die into the at least three sublayers.

This can be done by providing each mixture into a separate extruder which are in fluid communication with the single die.

If the interlayer film has three sublayers, it is preferred to provide the mixtures for the outer layers into a first extruder and the mixture for the inner layer is provided into a second extruder.

EXAMPLES

The CIE76 color difference was measured according to CIE No.15:2004, DIN 5033 part 7, ASTM E1164 and JIS Z 8722 with D65-norm light under an observation angle of 10° at a laminate comprising 2 sheets of standard 2 mm float glass with a 0,76 mm interlayer film.

To this end, 30x30 cm sheet of interlayers were cut over the width of extruded film and produced into the above-defined laminates. Colometry measurements were performed at the laminates approximately every 10 cm as shown in Fig 1 and 2, starting at a point about 2,5 cm from the edge of the interlayer.

To assess the color uniformity of a film, the mean value and standard deviation of the colorimetric data was determined. Calculation of the mean values $\overline{L^*}$, $\overline{a^*}$ and $\overline{b^*}$:

$$\overline{L^*} = \frac{1}{n}\sum_{i=1}^{n} L_i^*$$

$$\overline{a^*} = \frac{1}{n}\sum_{i=1}^{n} a_i^*$$

$$\overline{b^*} = \frac{1}{n}\sum_{i=1}^{n} b_i^*$$

Calculation of the standard deviation $\sigma_L{}^*$, $\sigma_a{}^*$ and $\sigma_b{}^*$:

$$\sigma_{L^*} = \sqrt{\frac{1}{n-1}\sum_{i=1}^{n}(L_i^* - \overline{L^*})^2}$$

$$\sigma_{a^*} = \sqrt{\frac{1}{n-1}\sum_{i=1}^{n}(a_i^* - \overline{a^*})^2}$$

$$\sigma_{b^*} = \sqrt{\frac{1}{n-1}\sum_{i=1}^{n}\left(b_i^* - \overline{b^*}\right)^2}$$

Since only a limited area of the film can be examined, and to better assess the actual fluctuation of color uniformity using a single parameter, the parameter $\Delta E_{95\%}^*$ was used:

$$\Delta E_{95\%}^* = \sqrt{(L_{\min}^* - L_{\max}^*)^2 + (a_{\min}^* - a_{\max}^*)^2 + (b_{\min}^* - b_{\max}^*)^2}$$

Where the min values $L_{\min}^*$, $a_{\min}^*$, $b_{\min}^*$ and max values $L_{\max}^*$, $a_{\max}^*$, $b_{\max}^*$ were calculated by:

$$L_{\min}^* = \overline{L^*} - 1.96 \cdot \sigma_{L^*}$$

$$L_{\max}^* = \overline{L^*} + 1.96 \cdot \sigma_{L^*}$$

$$a_{\min}^* = \overline{a^*} - 1.96 \cdot \sigma_{a^*}$$

$$a_{\max}^* = \overline{a^*} + 1.96 \cdot \sigma_{a^*}$$

$$b_{\min}^* = \overline{b^*} - 1.96 \cdot \sigma_{b^*}$$

$$b_{\max}^* = \overline{b^*} + 1.96 \cdot \sigma_{b^*}$$

The pre-factor 1.96 is used to take into account the 95% confidence interval.

In the examples illustrated in Fig 1 and 2, each product was manufactured with multiple sublayers. In one or more sublayers, the plasticizer content ranged from 20-35 wt%, while in other sublayers, the plasticizer content ranged from 25-40 wt%.

The example shown in Fig 1, only the plasticizer used in the sublayers with lower plasticizer content contained dyes and/or pigments. Conversely, the sublayers with higher plasticizer content utilized a plasticizer batch that was clear, containing no dyes and/or pigments.

In the example depicted in Fig 2, dyes and/or pigments were present in both the sublayers with lower and higher plasticizer content. To optimize cost-efficiency, a single plasticizer batch containing dyes and/or pigments was used.

Tab.1 summarizes the results of the described calculations. It can be clearly seen that in the film where dyes and/or pigments are in all sublayers $\Delta E^*_{95\%}$ is significantly smaller at 1.08 than with dyes and/or pigments in all sublayers where $\Delta E^*_{95\%}$ is 2.33. Thus, the invention describes a way to produce a film with high color uniformity and high cost-efficiency.

Tab. 1

|  | $\overline{L^*}$ | $\overline{a^*}$ | $\overline{b^*}$ | $\sigma_L^*$ | $\sigma_a^*$ | $\sigma_b^*$ | $\Delta E^*_{95\%}$ |
|---|---|---|---|---|---|---|---|
| dyes and/or pigments in in low plasticizer sublayers | 23,33 | 0,27 | 1,70 | 0,59 | 0,06 | 0,06 | 2,33 |
| dyes and/or pigments in all sublayers | 23,91 | 0,35 | 1,44 | 0,27 | 0,04 | 0,06 | 1, 08 |

**Claims**

1. Method for manufacturing a pigmented interlayer film by simultaneous extrusion of at least two sublayers, each comprising the same or a different polyvinyl acetal, at least one plasticiser and at least one pigment and/or dye **characterised in**

   a. providing a masterbatch, comprising at least one plasticiser and at least one pigment and/or dye
   b. providing at least three mixtures from the masterbatch and the polyvinyl acetals
   c. extrusion of the mixtures into at least three sublayers which are combined into the interlayer film

   wherein at least one sublayer has a different plasticiser and pigment content than the other sublayers.

2. Method according to claim 1, **characterised in that** the difference in plasticiser content is at least 2% by weight.

3. Method according to claim 1 or 2, **characterised in that** the interlayer film has three sublayers, and wherein the sublayer in the middle has a higher plasticizer content as the outer sublayers.

4. Method according to claim 1 or 2, **characterised in that** the interlayer film has three sublayers, and wherein the sublayer in the middle has a higher plasticizer content as the outer sublayers and wherein the plasticizer content of the outer sublayers is identical.

5. Method according to any of claims 1 to 4, **characterised in that** the interlayer film has three sublayers, and wherein the sublayer in the middle is thinner than the outer sublayers.

6. Method according to any of claims 1 to 4, **characterised in that** the interlayer film has three sublayers, and wherein the sublayer in the middle is thinner than the outer sublayers and wherein the thickness of the outer layers is identical.

7. Method according to any of claims 1 to 6, **characterised in that** the mixtures are extruded in a single die into the at least three sublayers.

8. Method according to any of claims 1 to 7, **characterised in that** each mixture is provided into a separate extruder which are in fluid communication with the single die.

9. Method according to any of claims 1 to 7, **characterised in that** the interlayer film has three sublayers, and wherein the mixtures for the outer layers are provided into a first extruder and the mixture for the inner layer is provided into a second extruder.

10. Method according to any of claims 1 to 9, **characterised in that** the interlayer film has three sublayers, and wherein the outer sublayers have a plasticizer content of less than 30 % by weight and the middle sublayer has a plasticizer content of more than 30 % by weight.

11. Method according to any of claims 1 to 10, **characterised in that** the content of the at least one pigment or dye in the masterbatch is between 1 and 5% by weight.

12. Method according to any of claims 1 to 11, **characterised in that** the CIE76 colour difference $\Delta E^*_{95\%} = \sqrt{(L^*_{\min} - L^*_{\max})^2 + (a^*_{\min} - a^*_{\max})^2 + (b^*_{\min} - b^*_{\max})^2}$ of the interlayer when laminated between two sheets of float glass having a thickness of 2 mm as measured between two points on the laminate having a distance of 10 cm is less than 1.9.

dyes and/or pigments in
in low plasticizer sublayers;
from bottom to top: L*, a*, b*

Fig. 1

dyes and/or pigments in all sublayers;
from bottom to top: L*, a*, b*

Fig. 2

Europäisches
Patentamt

European
Patent Office

Office européen
des brevets

# EUROPEAN SEARCH REPORT

**Application Number**

EP 24 20 6573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/224423 A1 (KELLER UWE [DE]) 14 August 2014 (2014-08-14) * paragraph [0010] - paragraph [0012] * * paragraph [0025] * ----- | 1-12 | INV. B32B17/10 B32B27/08 B32B7/02 B29C48/21 C08J3/22 |
| A | WO 2023/200013 A1 (SEKISUI CHEMICAL CO LTD [JP]) 19 October 2023 (2023-10-19) * paragraph [0005] - paragraph [0007] * * examples 1, 2, 5 - 17, 27, 28 * * paragraph [0403] - paragraph [0406] * ----- | 1-12 | |
| A | CN 112 644 113 A (WU AIPING) 13 April 2021 (2021-04-13) * paragraph [0003] - paragraph [0005] * * paragraph [0011] * * paragraph [0024] - paragraph [0031] * ----- | 1-12 | |

**TECHNICAL FIELDS SEARCHED (IPC)**

B32B
B60J
C03C
C08J
G02B

The present search report has been drawn up for all claims

| Place of search | Date of completion of the search | Examiner |
|---|---|---|
| The Hague | 20 February 2025 | Lichau, Holger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 6573

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | | Publication date | Patent family member(s) | | Publication date |
|---|---|---|---|---|---|
| US 2014224423 A1 | | 14-08-2014 | CN | 103992047 A | 20-08-2014 |
| | | | EP | 2767393 A1 | 20-08-2014 |
| | | | EP | 2767394 A1 | 20-08-2014 |
| | | | JP | 6296816 B2 | 20-03-2018 |
| | | | JP | 6682492 B2 | 15-04-2020 |
| | | | JP | 2014156390 A | 28-08-2014 |
| | | | JP | 2018058760 A | 12-04-2018 |
| | | | PL | 2767394 T3 | 28-04-2017 |
| | | | US | 2014224423 A1 | 14-08-2014 |
| WO 2023200013 A1 | | 19-10-2023 | CN | 118696017 A | 24-09-2024 |
| | | | EP | 4509476 A1 | 19-02-2025 |
| | | | JP | WO2023200013 A1 | 19-10-2023 |
| | | | KR | 20250007496 A | 14-01-2025 |
| | | | TW | 202402521 A | 16-01-2024 |
| | | | WO | 2023200013 A1 | 19-10-2023 |
| CN 112644113 A | | 13-04-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1527107 B1
- WO 2004063231 A1
- EP 1606325 A1
- WO 03020776 A1